# FASCICULE DE BREVET EUROPEEN

(11) **EP 3 372 539 B1**
(45) Date de publication et mention de la délivrance du brevet: **06.11.2024**
(21) Numéro de dépôt: 18158155.4
(22) Date de dépôt: 22.02.2018
(51) Int. Cl.: B65G 47/14, B65G 47/256

(54) **DISPOSITIF ET METHODE DE FOURNITURE FIABLE D'ELEMENTS DE BOUCHAGE CONFORMES**
VORRICHTUNG UND METHODE DER ZUVERLÄSSIGEN VERSORGUNG MIT KONFORMEN VERSCHLUSSELEMENTEN
DEVICE AND METHOD FOR RELIABLY SUPPLYING COMPLIANT SEALING ELEMENTS

(30) Priorité: 08.03.2017 FR 1751863
(43) Date de publication de la demande: 12.09.2018
(73) Titulaire: Gebo Packaging Solutions France, 67116 Reichstett (FR)
(72) Inventeur: ROTH, Emmanuel, 67116 REICHSTETT (FR)
(74) Mandataire: Sidel Group

(56) Documents cités:
- WO-A1-2016/107656
- CN-A- 1 529 165
- DE-A1- 102012 216 163
- JP-A- 2010 101 691
- US-A- 2 756 862
- US-A- 4 741 428
- US-A- 5 924 546

## Description

La présente invention relève du domaine de la fourniture d'éléments de bouchage pour des conteneurs de liquide, du type bouteille, flacon ou autres, et a pour objet, d'une part, un dispositif permettant de convoyer de façon sélective des éléments conformes, et, d'autre part, une méthode mettant en oeuvre ce dispositif.

Dans le domaine de l'invention, la fourniture d'éléments de bouchage est nécessaire en amont d'une machine qui a pour fonction essentielle de remplir le conteneur et de le fermer.

La fourniture d'élément de bouchage se fait préférablement avec un premier dispositif de tri comme décrit par exemple dans WO2006/045927 et comprenant une trémie, dans laquelle une grande quantité d'éléments de bouchage peut être versée en vrac, ainsi qu'un tapis d'élévation, circulant vers le haut depuis la trémie pour y prélever des éléments et les amener au niveau d'une zone de sortie supérieure. Le tapis présente généralement des tasseaux transversaux sur lesquels reposent les éléments de bouchage lors de leur convoyage vers le haut.

Lors de la circulation sur le tapis entre la trémie, zone d'alimentation, et la zone de sortie, les éléments mal orientés sont éjectés, préférablement simplement en les faisant retomber du tapis vers la trémie grâce à la pesanteur, comme cela est par exemple décrit dans US5394972 ou US5586637. Cela permet ainsi généralement d'assurer que les éléments de bouchage délivrés par ce premier dispositif de tri ont tous leur fond du bon côté.

Ainsi, EP2588395 divulgue une roue trieuse située en aval du dispositif de circulation décrit dans le précédent paragraphe qui dégage des capsules mal positionnées grâce à un principe de doigts escamotables qui peuvent, selon son orientation, accrocher la capsule et la guider ou non. Il est aussi possible d'utiliser une telle roue pour discriminer les capsules en fonction de l'éventuelle absence de collerette. Le convoyage en aval de cette roue se fait avec deux bandes qui entraînent les éléments de bouchage sans les référencer et qui les convoient donc en vrac.

WO2016/107656 divulgue par exemple un moyen d'analyse d'un élément bouchant, situé au niveau d'un convoyeur d'élévation qui contrôle une mauvaise orientation, une dimension, et si l'élément bouchant est complet. Ce moyen d'analyse est couplé à un moyen d'éjection se trouvant en aval et qui éjecte les éléments bouchant considérés comme non conformes. Ledit document divulgue un dispositif de fourniture d'éléments triés pour alimenter un poste de travail en aval, ledit dispositif comprenant une chute descendante qui amène les éléments, un moyen de traitement à l'unité qui reçoit les éléments de la chute, une branche transporteuse ascendante qui s'étend à partir du moyen de traitement et qui en reçoit les éléments, un moyen d'éjection situé au niveau de la branche transporteuse ascendante, un moyen de vision pour contrôler les éléments, tel qu'une caméra, et une unité de commande qui déclenche l'actionnement du moyen d'éjection en cas de détection d'un défaut par le moyen de vision pour éjecter les éléments non conforme. Ledit document divulgue également un procédé correspondant de fourniture d'éléments triés pour alimenter un poste de travail en aval.

Il est donc nécessaire de proposer une solution qui permette, et ce même à haute cadence, de détecter, en aval d'un dispositif d'orientation, des éléments de bouchage qui seraient non conformes, en particulier en termes d'orientation, et qui présente une distance la plus courte entre un moyen de vision et un moyen d'éjection afin d'avoir un convoyeur d'élévation moins haut, et donc plus ergonomique pour l'utilisateur et un temps de réponse entre le contrôle de l'élément bouchant et l'éjection plus rapide.

Pour ce faire, l'invention propose de contrôler les éléments de bouchage positionnés au niveau du moyen de traitement par au moins un moyen de vision.

A cet effet, l'invention a pour objet un dispositif selon la revendication 1 de fourniture d'éléments triés, type capsule, bouchon, couronne, ou autres, pour alimenter un poste de travail en aval, ledit dispositif comprenant une chute gravitaire qui délivre les éléments, un moyen de traitement à l'unité qui reçoit les éléments de la chute, une branche transporteuse ascendante qui s'étend à partir du moyen de traitement, et un moyen d'éjection situé au niveau de la branche transporteuse ascendante.

Selon l'invention le dispositif comprend au moins un moyen de vision positionné pour contrôler les éléments au niveau du moyen de traitement.

L'invention a aussi pour objet une méthode selon la revendication 6 qui met en oeuvre un tel dispositif, à savoir un procédé de fourniture d'éléments triés, type capsule, bouchon, couronne, ou autres, pour alimenter un poste de travail en aval, comprenant une succession d'étapes consistant essentiellement à
amener les éléments en colonne unifilaire vers un moyen de traitement sous forme d'une chute descendante,
puis, convoyer et effectuer une mise au pas des éléments dans le moyen de traitement,
puis, élever les éléments dans une branche transporteuse ascendante.

Selon l'invention le procédé comprend en outre, une étape d'analyse des éléments par au moins un moyen de vision au niveau du moyen de traitement.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 est une vue d'ensemble d'une installation de fourniture d'éléments de bouchage,
- la figure 2 est une vue détaillée d'un premier mode de réalisation du dispositif de fourniture d'éléments de bouchage,
- la figure 3 est une vue détaillée d'un deuxième mode de réalisation du dispositif de fourniture d'élément de bouchage,
- la figure 4 est une vue détaillée d'un troisième mode de réalisation du dispositif de fourniture d'élément de bouchage.

L'invention a ainsi tout d'abord pour objet un dispositif de fourniture 1 d'éléments 2 triés, type capsule, couronne, bouchon, ou autres, pour alimenter un poste de travail en aval, ledit dispositif comprenant une chute 3 descendante qui délivre les éléments, un moyen de traitement 4 à l'unité qui reçoit les éléments de la chute, une branche transporteuse ascendante 5 qui s'étend à partir du moyen de traitement, et un moyen d'éjection 6 situé au niveau de la branche transporteuse ascendante.

Il convient ici de noter que les éléments 2 peuvent en particulier être des bouchons ou capsules qui ont alors une forme complémentaire à un goulot cylindrique d'un contenant type flocon, bouteille. L'élément de bouchage se compose d'une face en vis-à-vis de laquelle se trouve une ouverture et d'une paroi composant la tranche, de sorte qu'ils ont une section en forme de U pour épouser la forme du goulot sur lequel ils sont apposés. L'élément 2 présente alors une symétrie au moins locale autour d'un axe de symétrie, qui correspond généralement à l'axe du filetage servant à fixer l'élément 2 sur le contenant.

Ce dispositif de fourniture 1 a donc pour fonction première d'alimenter un poste de travail, du type remplisseuse, boucheuse, en éléments 2 de fermeture, du type capsule, bouchon, ou autres. Les éléments triés signifient qu'ils sont orientés l'un après l'autre et qu'ils sont tous de qualités intrinsèques suffisantes pour pouvoir être utilisés pour boucher un contenant.

En amont de la chute 3 descendante, une installation de fourniture d'éléments comprend un moyen d'orientation d'éléments qui amène les éléments dans une position prédéfinie, et réalise donc une opération de sélection des seuls éléments 2 bien orientés.

Dans des modes de réalisation préférés, le moyen d'orientation peut prendre la forme d'un tapis muni de tasseaux transversaux, sur lesquels les éléments 2 peuvent se positionner, c'est-à-dire que la face de l'élément est en contact avec le fond du tasseau. Les éléments 2 mal orientés retombent dans la trémie située en partie basse de l'installation ou le moyen d'orientation peut également prendre la forme d'un bol centrifuge (non représenté). Ce bol centrifuge comprend une chambre cylindrique qui est alimentée en son centre par des éléments 2 en vrac. Cette chambre cylindrique est montée rotative par rapport à son axe de révolution afin de transférer les éléments par force centrifuge vers une sortie.

Les éléments 2 orientés passent par la chute 3 descendante orientée essentiellement vers le bas. Les éléments descendent dans cette chute par gravitation. En amont du moyen de traitement 4, une accumulation d'éléments 2 est ainsi possible au sein de la chute 3 descendante, ce qui permet d'assurer un approvisionnement constant au moyen de traitement 4 grâce à une régulation adaptée.

En aval de la chute 3, les éléments entrent en partie haute du moyen de traitement 4. Le moyen de traitement traite chaque élément 2, séparément, un à un, alors qu'en amont, ils se trouvent librement en vrac, les uns contre les autres au sein d'une colonne unifilaire s'étendant verticalement au sein de la chute 3 descendante.

Le moyen de traitement 4 permet ainsi de réaliser le référencement un à un des éléments 2, ainsi que de définir une position de référencement précise, leur position étant jusqu'alors inconnue précisément. Le moyen de traitement 4 peut assurer une orientation des éléments, voire une éjection des éléments non conformes. Le moyen de traitement 4 permet au moins de saisir chaque élément séparément et de les fournir à une branche transporteuse ascendante 5 juste après. Etant situé en partie basse du dispositif, le moyen de traitement 4 est aisément accessible pour une intervention en cas de problème.

Puis à la suite du moyen de traitement, les éléments 2 sont pris en charge par la branche transporteuse ascendante 5 qui comprend une bande sans fin sur laquelle sont fixés des taquets 12 qui exercent une poussée sur la tranche des éléments pour les élever, une sole sur laquelle glisse la face des éléments, et une paroi opposée à la sole afin d'éviter tout basculement de l'élément, ainsi qu'un guide 13 opposé à la branche transporteuse ascendante 5.

La structure de la bande transporteuse ascendante 5 permet de transporter les éléments un par un et de maintenir l'orientation des éléments afin de pouvoir être exploité par un poste de travail en aval ou par un moyen d'éjection.

Un moyen d'éjection 6 est agencé préférablement au niveau de la bande transporteuse et en aval d'un moyen de contrôle afin que le moyen de contrôle puisse commander le moyen d'éjection pour éjecter les éléments contrôlés comme non conformes.

Dans des modes de réalisation préférés, le moyen d'éjection 6 prend la forme d'une butée guide modifiant le trajet de l'élément 2 ou entraînant l'élément 2, ou encore d'une buse à jet d'air comprimé ou encore un dispositif mécanique tel qu'un vérin pour pousser l'élément non conforme.

Selon l'invention, le dispositif de fourniture 1 comprend au moins un moyen de vision positionné pour contrôler les éléments au niveau du moyen de traitement 4.

Le moyen de vision 7 contrôle l'aspect des éléments 2 alors qu'ils sont transportés par le moyen de traitement 4, et, d'autre part, ils sont éjectés par au moins un moyen d'éjection 6, agissant en aval du moyen de vision 7, pour éjecter les éléments 2 détectés comme étant non conformes sur la base d'un contrôle visuel. Le contrôle visuel réalisé par le moyen de vision 7 permet de vérifier la conformité finale des éléments 2 apportés au poste de travail aval par le dispositif de fourniture 1, en termes de position, d'orientation, et/ou de caractéristiques intrinsèques.

Par caractéristiques intrinsèques, il faut comprendre notamment les dimensions de l'élément comme son diamètre. Des plus, dans le cadre des bouchons, le contrôle visuel permet de vérifier la présence ou pas de bague d'inviolabilité ou bien d'un arrachement partiel de matière ou la présence ou pas d'un logo sur la face de l'élément.

Ce moyen de vision 7 comprend une caméra ou un appareil photographique équipé d'un objectif tourné vers l'élément à contrôler, une unité de commande qui contrôle l'image numérisée et l'interprète.

Il convient ici de noter qu'un axe du moyen de vision 7 notamment une caméra, correspond à la direction dans laquelle se trouve la caméra pour effectuer une prise de vue.

Ce moyen de vision 7 peut fonctionner de différentes manières, soit le moyen de vision contrôle l'élément à une position de référencement précise, c'est-à-dire, lorsque l'élément 2 est à un point précis dans le moyen de traitement, soit le moyen de vision contrôle l'élément sur un tronçon de son déplacement lorsqu'il circule dans le moyen de traitement et dans ce cas, le moyen de vision cherche d'abord l'élément de bouchage sur une partie du tronçon réalisé par l'élément dans le moyen de traitement et ensuite l'élément est contrôlé.

Selon une caractéristique additionnelle possible, le dispositif 1 de fourniture d'éléments comprend un moyen de vision 6 situé en façade au moyen de traitement de façon à contrôler l'une des faces de l'élément. En d'autres termes, le moyen de vision se positionne en vis-à-vis du moyen de traitement, c'est-à-dire que, l'axe du moyen de vision, qui correspond à la direction dans laquelle se trouve ledit moyen de vision pour effectuer une prise de vue, est parallèle à l'axe de symétrie de l'élément 2, qui correspond généralement à l'axe servant à fixer l'élément 2 sur le contenant, comme par exemple l'axe de filetage.

Dès lors, l'axe du moyen de vision peut être placé d'un côté ou de l'autre du moyen de traitement afin de pouvoir contrôler la face ou l'ouverture de l'élément 2 suivant le positionnement de l'axe.

Selon une caractéristique additionnelle possible, le dispositif 1 de fourniture d'éléments comprend un moyen de vision 7 qui est situé sur un côté du moyen de traitement de façon à contrôler une partie de la tranche de l'élément, c'est-à-dire que l'axe du moyen de vision qui correspond à la direction dans laquelle se trouve ledit moyen de vision pour effectuer une prise de vue, doit être perpendiculaire à l'axe de symétrie de l'élément 2, qui correspond généralement à l'axe du filetage servant à fixer l'élément 2 sur le contenant.

Dès lors, l'axe du moyen de vision peut être placé sur le côté du moyen de traitement par exemple pour vérifier que dans le cas des bouchons, une bague d'inviolabilité est présente ou pas. En cas d'absence de la bague d'inviolabilité, le bouchon est éjecté.

Le fonctionnement du moyen de vision 7 est synchronisé avec le fonctionnement du moyen de traitement.

Le dispositif de fourniture 1 comprend une unité de commande qui déclenche le moyen de vision 7 en fonction d'un signal représentant l'avancement du moyen de traitement 4.

De plus, l'unité de commande déclenche l'actionnement du moyen d'éjection 6, de sorte à mettre en oeuvre le moyen d'éjection 6 en cas de détection d'un défaut par le moyen de vision 7, et ce de façon synchronisée avec le mouvement du moyen de traitement pour éjecter les éléments non conforme.

Selon une caractéristique additionnelle possible, le moyen de traitement comprend une roue de référencement 8 qui délivre les éléments à l'unité à la branche transporteuse ascendante 5.

Le moyen de traitement 4 comprend une roue de référencement 8 à la périphérie de laquelle se trouvent des surfaces 10 sensiblement radiales et aptes à convoyer les éléments 2 de bouchage un par un, un guide 11 extérieur se trouvant dans la continuité de l'un des guides de la chute 3 gravitaire et parallèle à la roue de référencement 8 afin de retenir les éléments, de les référencer entre la surface 10 et le guide 11, une sole de glissement se trouvant dans la continuité de la sole de la chute 3 gravitaire permettant à l'élément de glisser dessus pendant son convoyage, et une paroi étant située à l'opposé et parallèle à la sole de glissement afin d'empêcher les éléments 2 de basculer pendant leurs déplacements.

Les surfaces 10 sont espacées l'une de l'autre d'une distance compatible avec le traitement réalisé postérieurement, c'est-à-dire, contrôle de la qualité de l'élément de bouchage, alimentation du poste de travail en aval telle qu'une boucheuse, poste de stérilisation de l'élément.

Cette roue de référencement permet une mise au pas des éléments, c'est-à-dire de mettre une distance précise entre chaque élément. De plus, la roue de référencement couplée à un codeur permet de connaître la position précise des éléments, ce qui est utilisé pour le déclenchement du moyen de vision 7 et/ou l'actionnement du moyen d'éjection ou pour toutes autres opérations où la position précise de l'élément doit être connue.

Selon une caractéristique additionnelle possible, le moyen de traitement 4 comprend une roue de référencement 8 qui délivre les éléments à l'unité à une roue de retour 9 et la roue de référencement 8 et la roue de retour 9 sont équipées de surfaces 10 de référencement qui exercent une poussée sur l'élément pour le mettre au pas et pour le déplacer.

Le moyen de traitement comprend une roue de référencement 8, mais toujours dans le moyen de traitement 4, les éléments 2 sont pris en charge par une roue de retour 9. Celle-ci tourne dans le sens horaire contrairement à la roue de référencement qui tourne dans le sens antihoraire. De façon générale, elles sont contrarotatives.

La roue de retour 9 a une structure similaire à la roue de référencement 8, c'est-à-dire que la roue de retour 9 comprend à sa périphérie des surfaces 10 sensiblement radiales et aptes à convoyer les éléments 2 un par un, un guide 14 extérieur se trouvant dans la continuité du guides 11 et parallèle à la circonférence de roue de retour 9 afin de retenir les éléments, de les référencer entre la surface 10 et le guide 14, une sole de glissement se trouvant dans la continuité de la sole de la roue de référencement permettant à l'élément de glisser dessus pendant son convoyage, et une paroi étant située à l'opposée et parallèle à la sole de glissement afin d'empêcher les éléments 2 de basculer pendant leurs déplacements.

La roue de retour 9 permet, en plus des avantages donnés précédemment pour la roue de référencement 8, d'augmenter le temps de transfert entre la chute 3 et la branche transporteuse ascendante 5 et donc d'optimiser le contrôle de l'élément et/ou l'éjection. Cette disposition permet également si nécessaire de réaliser un deuxième contrôle en positionnant un deuxième moyen de vision entre la chute et la bande transporteuse ascendante.

En variante, la roue de retour 9 peut être une roue qui sert à engrener une courroie qui est munie de doigts entre lesquels se trouvent à chaque fois un élément 2. Ces doigts comprennent une surface qui a la même fonction que la surface 10 du mode de réalisation décrit précédemment, c'est-à-dire que ladite surface est apte à convoyer les éléments 2 un par un.

Selon une caractéristique additionnelle possible, le moyen de traitement 4 comprend une roue de référencement 8 qui délivre les éléments à une courroie montée sur la roue de retour 9, la courroie et la roue de référencement sont équipées de surfaces 10 de référencement qui exercent une poussée sur l'élément pour le mettre au pas et pour le déplacer.

L'invention a aussi pour objet un procédé de fourniture d'éléments 2 triés, type capsule, bouchon, ou autres, pour alimenter un poste de travail en aval, comprenant une succession d'étapes consistant essentiellement à amener les éléments en colonne unifilaire vers un moyen de traitement sous forme d'une chute descendante,
puis, convoyer et effectuer une mise au pas des éléments dans un moyen de traitement,
puis, élever les éléments à l'unité dans une branche transporteuse ascendante 5.

Le procédé de fourniture d'éléments 2 comprend en outre, une étape de contrôle des éléments par au moins un moyen de vision 6 au niveau du moyen de traitement 4.

Selon une caractéristique possible, l'étape de contrôle de l'élément est réalisée par un moyen de vision 7 synchronisé avec le déplacement de l'élément 2 de bouchage dans le moyen de traitement 4.

Le procédé comprend en outre, une étape d'éjection de l'élément en fonction de l'étape de contrôle, ladite étape d'éjection est mise en oeuvre au niveau de la branche transporteuse ascendante 5.

Grâce au traitement à l'unité et au référencement associé des éléments 2, on éjecte uniquement et de façon sûr l'élément détecté comme défectueux, voir aussi, quelques éléments avant ou après.

Selon une caractéristique additionnelle possible, le procédé comprend une étape de contrôle réalisée avec le moyen de vision 6 se situant en façade du moyen de traitement de façon à contrôler une face de l'élément 2 de bouchage.

Selon une caractéristique additionnelle possible, le procédé comprend une étape de contrôle réalisée avec le moyen de vision 7 se situant sur un côté du moyen de traitement 4 de façon à contrôler une partie de la tranche de l'élément 2.

L'invention va maintenant être expliquée en référence avec les modes de réalisation illustrés.

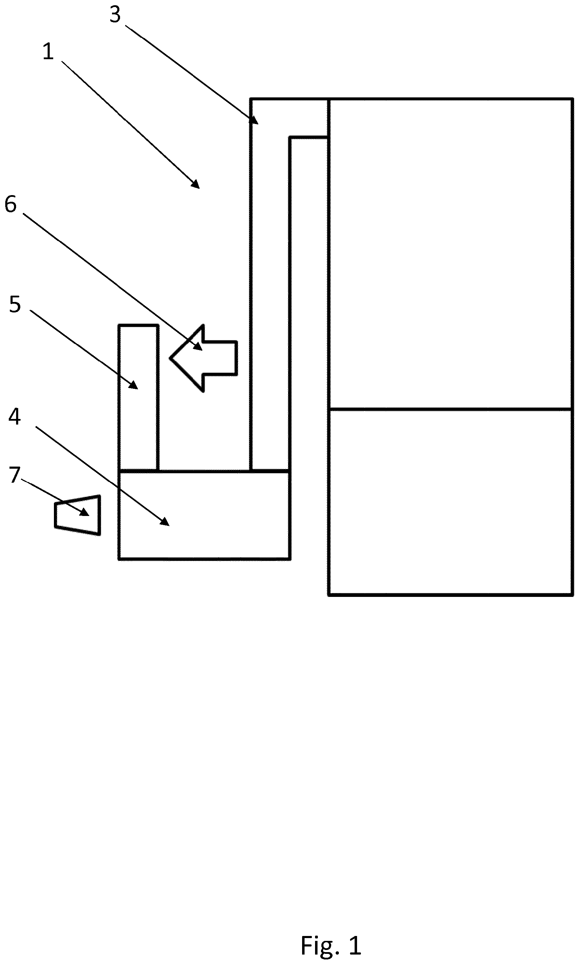

La figure 1 illustre en particulier une vue d'ensemble d'une installation de fourniture d'éléments de bouchage comportant trois modules.

Le premier module est un module de stockage des éléments 2 de bouchage qui comprend une trémie située en partie basse de l'installation de fourniture. Cette trémie se compose d'une enceinte dans laquelle sont déversés en vrac les éléments de bouchages. Cette enceinte définit un volume d'éléments de bouchage permettant notamment de définir l'autonomie de ce dispositif de fourniture. Une partie basse de cette enceinte donne accès au second module.

Dans un premier mode de réalisation illustré sur la figure 1, le second module est un module de tri qui comprend un convoyeur sensiblement vertical permettant d'élever les éléments de bouchages de la partie basse, c'est-à-dire, de la trémie vers une partie haute de l'installation. Ce convoyeur se compose d'une bande sans fin comprenant des tasseaux placés horizontalement et personnalisés à l'élément de bouchage à transporter et à trier. Ces tasseaux ont le plus souvent une section en forme de U, c'est-à-dire qu'ils se composent d'un fond et de deux parois latérales. Ces tasseaux plongent dans la trémie où se trouvent les éléments en vrac, pour les prélever et les élever en partie haute de l'installation.

L'élément de bouchage se compose d'une face en vis-à-vis de laquelle se trouve une ouverture et d'une paroi composant la tranche, de sorte qu'il a une section en forme de U pour épouser la forme du goulot sur lequel il est apposé.

Ces éléments de bouchage sont pris en charge par les tasseaux pour lesquels il n'y a qu'une seule bonne orientation, c'est-à-dire que la face de l'élément de bouchage est en contact avec le fond du tasseau alors que les éléments mal orientés retombent dans la trémie. Pour favoriser cette opération d'orientation d'éléments, une bosse est aménagée à une certaine hauteur du convoyeur vertical. La différence de poids entre l'ouverture et la face est utilisée pour faire basculer et donc trier les éléments lors de leur passage sur la bosse, plus précisément, en laissant tomber les éléments dont la face n'est pas contre le fond du tasseau. Quand les éléments triés arrivent en haut du second module, ces éléments triés sous forme de ligne sont éjectés soit par un dispositif d'air comprimé ou soit un système mécanique se composant d'un doigt déplaçable dans le sens de la longueur du tasseau. Ce doigt passe entre les tasseaux et pousse la ligne d'éléments hors du second module. A la sortie de l'éjection, ces lignes d'éléments de bouchage triés sont envoyées vers un troisième module.

Dans une variante du second module, non représentée, il est possible d'utiliser un bol centrifuge pour effectuer le tri des éléments de bouchage.

Le troisième module est un dispositif de fourniture d'éléments comprenant une chute 3 gravitaire débouchant dans un moyen de traitement 4 à l'unité des éléments de bouchage où un moyen de vision les contrôle. Puis, ils sont repris par une branche transporteuse ascendante 5 pour être à nouveau élevés en direction d'un poste de travail aval. Lors de cette élévation, les éléments de bouchage identifiés comme non conformes sont éjectés par un moyen d'éjection 6.

En aval du second module, les lignes d'éléments de bouchage triés sont acheminées vers le moyen de traitement 4 par la chute 3 gravitaire essentiellement orientée vers le bas. Elle se compose de guides aptes à maintenir l'orientation des éléments de bouchage.

Il faut noter qu'en sortie du second module, les lignes d'éléments de bouchage triés sortent de manière discontinue ou séquentielle du fait que les tasseaux sont vidés l'un à la suite des autres alors que le poste de travail situé en aval tel qu'une boucheuse ou un dispositif de stérilisation fonctionne de manière continu. Afin de pallier ce problème, en aval de la chute 3, et en amont du moyen de traitement 4, les éléments de bouchage sont accumulés pour former ainsi un flux continu d'éléments de bouchage tous orientés.

En étant transférés dans le moyen de traitement, les éléments de bouchage subissent un traitement, c'est-à-dire qu'ils sont mis au pas les uns par rapport aux autres. En d'autres termes, ils sont convoyés avec une distance les uns par rapport aux autres, et sont contrôlés par au moins un moyen de vision 7.

Ce moyen de vision peut fonctionner de différentes manières, soit le moyen de vision contrôle l'élément de bouchage à une position précise du moyen de traitement, soit il contrôle l'élément de bouchage sur un tronçon de son déplacement lorsqu'il circule dans le moyen de traitement. Dès lors, le moyen de vision cherche d'abord l'élément de bouchage puis il le contrôle. Le moyen de traitement et le moyen de vision seront décrits plus en détail dans la description des autres figures.

En aval du moyen de traitement 4, les éléments de bouchage sont pris en charge, à l'unité, par la branche transporteuse ascendante 5 qui peut en assurer l'élévation pour par exemple alimenter le poste de travail situé en aval. Cette branche transporteuse est parallèle à la chute 3 gravitaire.

Le moyen d'éjection se situe au niveau de la branche transporteuse ascendante 5. Cette hauteur correspond au minimum à la circulation de la branche transporteuse ascendante 5 pendant le temps de réalisation du contrôle de l'élément de bouchage et le temps de transfert de l'information au moyen d'éjection 6. Le fait de contrôler des éléments de bouchage par au moins un moyen de vision situé dans le moyen de traitement, c'est-à-dire en partie basse du dispositif de fourniture 1, permet de placer le moyen d'éjection à une distance plus petite que si le contrôle avait été placé également dans la branche transporteuse ascendante comme cela pouvait être le cas dans l'état de l'art.

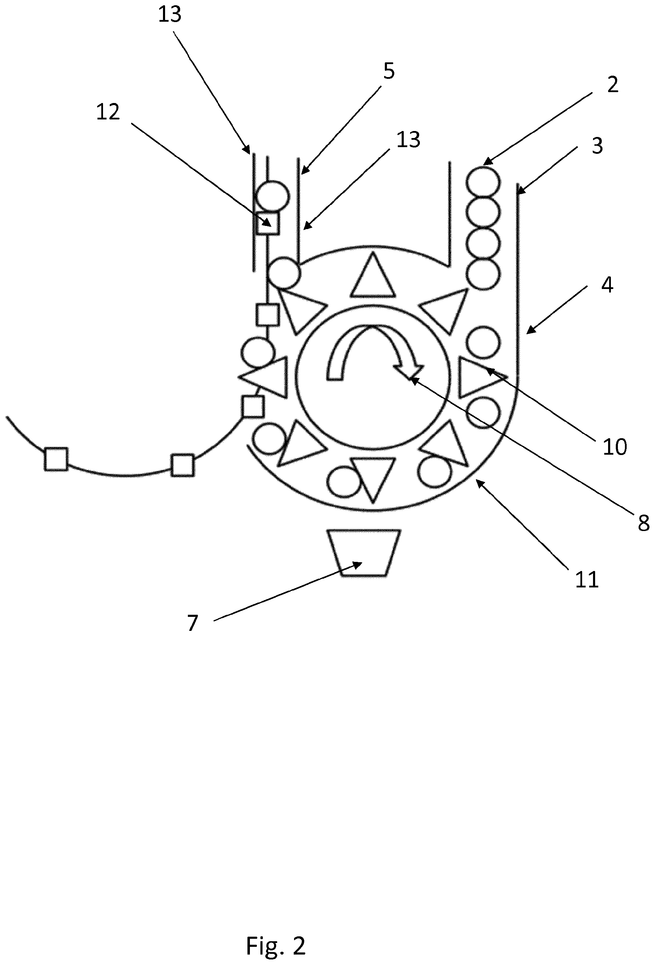

La figure 2 illustre un mode réalisation du dispositif 1 de fourniture d'éléments de bouchage et plus particulièrement du moyen de traitement 4.

En amont du moyen de traitement 4, les éléments de bouchage se trouvent en accumulation dans la chute 3 gravitaire. Cette chute gravitaire se compose d'une sole de glissement définissant un plan de référence sur laquelle glisse, classiquement, la face des éléments 2 et de guides situés de part et d'autre des éléments de bouchage. A l'opposé de la sole de glissement se trouve une paroi empêchant les éléments de basculer. Toujours dans une orientation classique, l'ouverture des éléments se trouve en regard de cette paroi.

En aval de la chute 3 gravitaire, les éléments de bouchage sont pris en charge par le moyen de traitement 4. Ce moyen de traitement comprend une roue de référencement 8 à la périphérie de laquelle se trouvent des surfaces 10 sensiblement radiales et aptes à convoyer les éléments 2 de bouchage un par un, un guide 11 extérieur se trouvant dans la continuité de l'un des guides de la chute 3 gravitaire et parallèle à la roue de référencement 8 afin de retenir les éléments, et de les référencer entre la surface 10 et le guide 11, ainsi qu'une sole de glissement se trouvant dans la continuité de la sole de la chute 3 gravitaire permettant à l'élément de glisser dessus pendant son convoyage, et une paroi étant située à l'opposée et parallèle à la sole de glissement afin d'empêcher les éléments 2 de basculer pendant leur déplacement.

Dans ce mode de réalisation, la roue de référencement 8 convoie les éléments de bouchage dans le sens horaire.

De plus, la sole de glissement et/ou la paroi opposée peuvent être transparentes.

Les surfaces 10 sont espacées l'une de l'autre d'une distance compatible avec le traitement réalisé postérieurement, c'est-à-dire, contrôle de la qualité de l'élément de bouchage, temps d'éjection de l'élément, alimentation du poste de travail en aval tel qu'une boucheuse, poste de stérilisation.

En variante, les surfaces 10 peuvent être sous la forme d'encoches entourant l'élément et positionnées sur le pourtour de la roue de référencement.

Par ailleurs, dans le cas particulier des bouchons équipés de bague d'inviolabilité, le guide 11 peut présenter une discontinuité au niveau de sa surface de contact avec l'élément 2. La surface de contact correspond à la hauteur de l'élément 2 sans bague d'inviolabilité. Dès lors, lorsque l'élément 2 n'a pas de bague d'inviolabilité, il tombe sous l'effet de son poids. Par ailleurs, ce guide 11 peut être réalisé dans un matériau transparent.

Dans le mode de réalisation illustré à la figure 2, la roue de référencement 8 tourne dans le sens horaire par rapport à un axe A qui est perpendiculaire à un plan défini par la roue de référencement et ce plan est sensiblement parallèle au plan défini par la sole de la chute gravitaire et au plan défini par la sole de glissement se trouvant au niveau de la roue de référencement.

En aval de cette roue de référencement, les éléments 2 sont pris en charge par une branche transporteuse ascendante 5 qui comprend une bande sans fin au niveau de laquelle se trouvent des taquets 12 qui exercent une poussée sur les éléments pour les entraîner, une sole sur laquelle glisse la face des éléments, et une paroi opposée à la sole afin d'éviter tout basculement de l'élément, ainsi que des guides 13 verticaux situés de part et d'autre du taquet 12 permettant d'éviter tout basculement de l'élément.

Pendant l'ascension, l'élément 2 est référencé entre le taquet 12 et au moins l'un des guides 13, c'est-à-dire que l'élément est à la fois en contact avec le taquet 12, l'un des guides 13, la sole ou la paroi qui définissent ainsi un volume de référencement et de stabilité pour l'élément 2.

La branche transporteuse ascendante 5 présente un moyen d'éjection 6 situé au niveau de l'un des guides 13. Ce moyen d'éjection comprend une buse d'air comprimé ou un dispositif mécanique tel qu'un vérin et un évidemment dans le guide 13 opposé au moyen d'éjection pour faire passer l'élément éjecté. La buse d'air comprimé ou le dispositif mécanique tel qu'un vérin a pour fonction d'éjecter l'élément en exerçant une poussée pour le déstabiliser de son volume de référencement constitué par le taquet 12, l'un des guides 13, et la sole ou la paroi.

Ce dispositif de fourniture d'éléments comprend au moins un moyen de vision 7 situé au niveau du moyen de traitement 4 et plus particulièrement, au niveau de la roue de référencement 8. Le moyen de vision est un moyen d'acquisition d'image tel qu'une caméra ou un appareil photographique couplé à une unité de commande qui contrôle la numérisation de l'élément.

Ce moyen de vision peut fonctionner de différentes manières, soit le moyen de vision contrôle l'élément de bouchage à un point précis donc à une position référencée dans la roue de référencement, soit le moyen de vision contrôle l'élément de bouchage sur un tronçon de son déplacement lorsqu'il circule dans le moyen de traitement et dans ce cas, le moyen de vision cherche d'abord l'élément de bouchage sur une partie du tronçon définie par la roue de référencement et ensuite l'élément est contrôlé.

Du fait que ce dispositif 1 de fourniture d'éléments fonctionne à une cadence élevée, le contrôle est réalisé quand l'élément 2 est référencé à un point précis dans la roue de référencement, c'est-à-dire, quand l'élément est positionné entre une surface 10 de la roue de référencement 8 et le guide 11.

De plus, toujours pour répondre au besoin d'avoir une cadence élevée, le déclenchement du contrôle est synchronisé entre la roue de référencement et le déclenchement du moyen de vision 7. En d'autres termes, la rotation de la roue de référencement 8 induit le déclenchement du moyen de vision 7.

Cette synchronisation est mise en oeuvre soit par un codeur couplé au moteur de mise en rotation de la roue de référencement 8, soit par un capteur mesurant l'angle de rotation de la roue de référence.

Dans certains modes de réalisation, le moyen de vision 7 est équipé d'un objectif qui est placé en façade par rapport au niveau du moyen de traitement 4 et plus particulièrement en vis-à-vis de la roue de référencement 8. En d'autres termes, l'objectif du moyen de vision 7 peut être associé à un plan et ce plan est sensiblement parallèle au plan défini par la roue de référencement.

Dès lors, l'objectif du moyen de vision peut être placé d'un côté ou de l'autre de la roue de référencement afin de pouvoir contrôler la face ou l'ouverture de l'élément 2 suivant le positionnement de l'objectif. Pour pouvoir effectuer ce type de contrôle, la sole de glissement ou la paroi située à l'opposé de la sole de glissement doit être en matériau transparent.

En variante, ce moyen de vision 7 présente un objectif qui peut être placé au regard du côté de la roue de référencement 8 afin de pouvoir contrôler la tranche de l'élément 2 et plus particulièrement dans le cas des bouchons équipés de bague d'inviolabilité de vérifier la présence ou pas de cette bague d'inviolabilité. Pour pouvoir effectuer ce type de contrôle le guide 11 périphérique à la roue de référencement doit être en matériau transparent.

Par ailleurs, le convoyage des éléments 2 dans la roue de référencement génère une rotation desdits éléments 2 sur eux-mêmes. Cette rotation peut être mise à profit pour pouvoir contrôler la tranche de l'élément et ce, avec au moins deux moyens de vision qui peuvent contrôler l'élément à deux endroits différents sur la roue de référencement, par exemple l'un après l'autre.

Une fois le contrôle réalisé, c'est-à-dire, l'orientation de la face et de l'ouverture de l'élément, la qualité de la face ou de l'ouverture de l'élément, ses dimensions, la présence ou pas de bague d'inviolabilité au niveau du bouchon, et/ou la qualité des bords d'une couronne, alors l'élément est éjecté ou pas selon l'un des critères donnés à l'unité de commande. Dès lors, dans le cas d'une éjection, l'unité de commande actionne le moyen d'éjection 6 afin de sortir uniquement l'élément identifié comme indésirable, voire aussi, quelques éléments avant ou/et après.

Une synchronisation est réalisée entre le moyen de traitement 4, le moyen de vision 7 et le moyen d'éjection 6 pour permettre l'éjection du seul et unique élément contrôlé comme non conforme par l'unité de commande, voire éjecter très peu éléments, c'est-à-dire un ou quelques élément(s) avant et un ou quelques élément(s) après celui contrôlé non conforme.

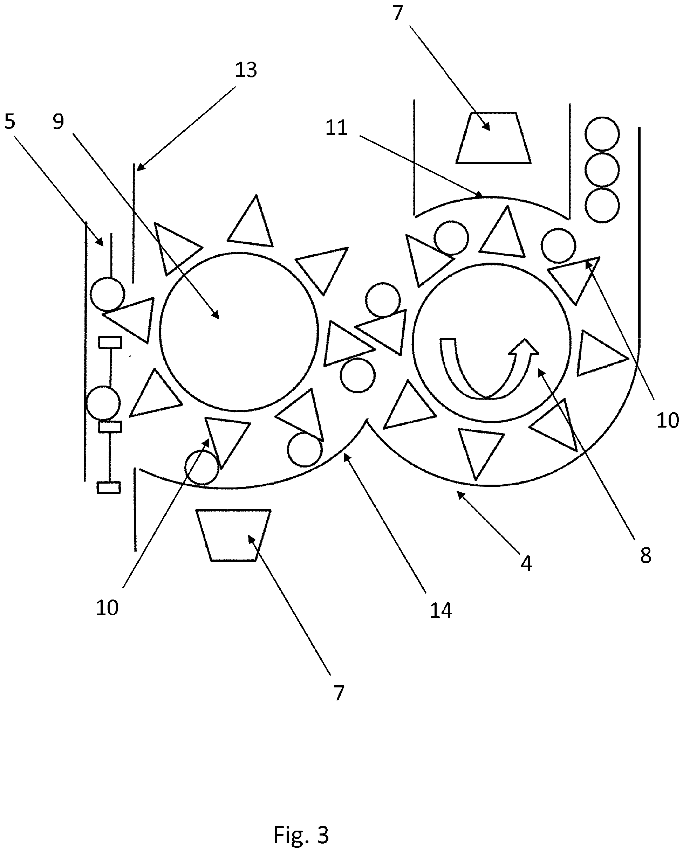

La figure 3 illustre un deuxième mode de réalisation du dispositif 1 de fourniture d'éléments de bouchage et plus particulièrement du moyen de traitement 4.

En amont du moyen de traitement 4, les éléments se trouvent en accumulation dans la chute 3 gravitaire. Cette chute gravitaire se compose d'une sole de glissement définissant un plan de référence et sur laquelle glisse classiquement la face des éléments 2, de guides situés de part et d'autre des éléments de bouchage, et à l'opposé de la sole de glissement, d'une paroi empêchant les éléments de basculer. Dans une orientation classique, l'ouverture des éléments se trouve en regard de cette paroi.

En aval de la chute 3 gravitaire, les éléments de bouchage sont pris en charge l'un après l'autre par le moyen de traitement 4. Ce moyen de traitement comprend une roue de référencement 8 et une roue de retour 9.

La roue de référencement 8 comprend des surfaces 10 à sa périphérie sensiblement radiales et aptes à convoyer les éléments 2 de bouchage un par un. Un guide 11 extérieur se trouve dans la continuité de l'un des guides de la chute 3 gravitaire et parallèle à la roue de référencement 8 afin de retenir les éléments, de les référencer entre la surface 10 et le guide 11. Une sole de glissement se trouve dans la continuité de la sole de la chute 3 gravitaire permettant à l'élément de glisser dessus pendant son convoyage. Une paroi est située à l'opposée et parallèle à la sole de glissement afin d'empêcher les éléments 2 de basculer pendant leurs déplacements.

Les surfaces 10 sont espacées l'une de l'autre d'une distance compatible avec le traitement réalisé postérieurement, c'est-à-dire, contrôle de la qualité des éléments de bouchage, alimentation du poste de travail en aval tel qu'une boucheuse, et poste de stérilisation de l'élément.

Dans le mode de réalisation illustré à la figure 3, la roue de référencement 8 tourne dans le sens antihoraire par rapport à un axe B qui est perpendiculaire à un plan défini par la roue de référencement. Ce plan est sensiblement parallèle à la sole de la chute gravitaire.

En aval de cette roue de référencement, mais toujours dans le moyen de traitement 4, les éléments 2 sont pris en charge par une roue de retour 9. Celle-ci tourne dans le sens horaire contrairement à la roue de référencement qui tourne dans le sens antihoraire.

La roue de retour 9 a une structure similaire à la roue de référencement 8, c'est-à-dire que la roue de retour 9 comprend à sa périphérie des surfaces 10 sensiblement radiales et aptes à convoyer les éléments 2 de bouchage un par un. Un guide 14 extérieur se situe parallèlement à la circonférence de roue de retour 9 afin de retenir les éléments, de les référencer entre la surface 10 et le guide 14. Une sole de glissement se trouve dans la continuité de la sole de la roue de référencement permettant à l'élément de glisser dessus pendant son convoyage. Une paroi se situe à l'opposée et parallèlement à la sole de glissement afin d'empêcher les éléments 2 de basculer pendant leur déplacement.

La roue de retour a notamment pour fonction d'augmenter le temps de transport et donc le temps disponible pour le contrôle par rapport à la solution décrite dans le premier mode de réalisation.

En aval de la roue de retour 9, les éléments sont pris en charge par une branche transporteuse ascendante 5 et donc élevés. La branche transporteuse ascendante 5 et le moyen d'éjection 6 ont la même structure que celle décrite précédemment pour la figure 2.

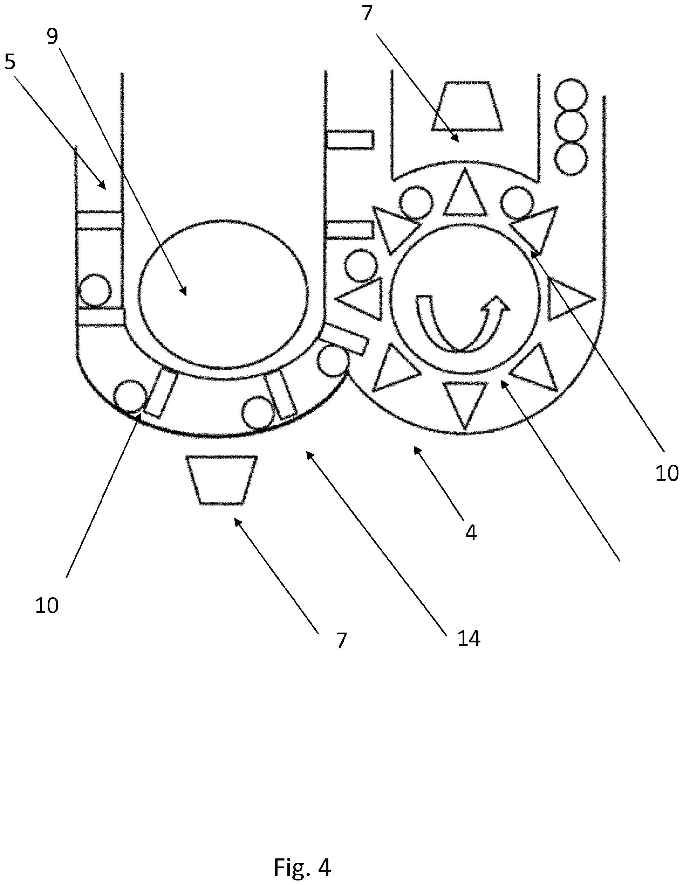

La figure 4 illustre un troisième mode de réalisation du dispositif 1 de fourniture d'éléments de bouchage et plus particulièrement du moyen de traitement 4.

Dans ce troisième mode de réalisation, la roue de retour 9 peut être une roue qui sert à engrener une courroie qui est munie de taquets entre lesquels se trouve à chaque fois un élément 2. Ces taquets comprennent une surface qui a la même fonction que la surface 10 du mode de réalisation décrit précédemment, c'est-à-dire que ladite surface est apte à convoyer les éléments 2 un par un.

Le moyen de vision peut fonctionner de différentes manières : soit le moyen de vision contrôle l'élément de bouchage à une position précise du moyen de traitement, soit il contrôle l'élément de bouchage sur un tronçon de son déplacement lorsqu'il circule dans le moyen de traitement. Dès lors, le moyen de vision cherche d'abord l'élément de bouchage, puis il le contrôle.

Pour répondre au besoin de cadence élevée, le déclenchement du contrôle est synchronisé entre la roue de référencement et/ou la roue de retour et le déclenchement du moyen de vision 7. En d'autres termes, la rotation de la roue de référencement 8 et/ou la roue de retour 9 induit le déclenchement du moyen de vision 7.

Cette synchronisation est mise en oeuvre soit par un codeur couplé au moteur de mise en rotation de la roue de référencement 8 et/ou la roue de retour 9, soit par un capteur mesurant l'angle de rotation de l'une des roues.

Le moyen de vision 7 est équipé d'un objectif qui est placé en façade par rapport au niveau du moyen de traitement 4 et plus particulièrement en vis-à-vis de l'une des roues. En d'autres termes, l'objectif du moyen de vision 7 peut être associé à un plan et ce plan est sensiblement parallèle au plan défini par l'une des roues, c'est-à-dire, la roue de référencement et/ou la roue de retour 9.

Dès lors, l'objectif du moyen de vision peut être placé d'un côté ou de l'autre de la roue de référencement afin de pouvoir contrôler la face ou l'ouverture de l'élément 2 suivant le positionnement de l'objectif. En d'autres termes, le moyen de vision 7 peut être placé devant ou derrière le moyen de traitement 4. Pour pouvoir effectuer ce type de contrôle, la sole de glissement et/ou la paroi située à l'opposé de la sole de glissement doivent être en matériau transparent.

En variante, ce moyen de vision 7 présente un objectif qui peut être placé en regard du côté de l'une des roues afin de pouvoir contrôler la tranche de l'élément 2 et plus particulièrement, dans le cas des bouchons équipés de bague d'inviolabilité, vérifier la présence ou pas de cette bague d'inviolabilité. Pour pouvoir effectuer ce type de contrôle, le guide 11 et/ou le guide 14 doivent être en matériau transparent.

Par ailleurs, le convoyage des éléments 2 dans les roues 8, 9 génère une rotation desdits éléments 2 sur eux-mêmes. Cette rotation peut être mise à profit pour pouvoir inspecter la tranche de l'élément et ce, avec au moins deux moyens de vision 6 qui peuvent contrôler l'élément à deux endroits différents sur les roues.

Une fois le contrôle réalisé, c'est-à-dire, l'orientation de la face et de l'ouverture de l'élément, la qualité de la face ou de l'ouverture de l'élément, ces dimensions, la présence ou pas de bague d'inviolabilité au niveau du bouchon, et/ou la qualité des bords d'une couronne, alors l'élément est éjecté ou pas selon l'un des critères paramétrés dans l'unité de commande. Dès lors, dans le cas d'une éjection, l'unité de commande actionne le moyen d'éjection 6 afin de sortir uniquement l'élément contrôlé comme indésirable ou au moins très peu d'éléments avant ou après.

Grâce à l'invention, il est ainsi possible d'obtenir un dispositif de fourniture 1 qui fonctionne à une cadence très élevée et qui est ergonomique pour l'opérateur car le moyen de vision, ainsi que le moyen d'éjection sont à une hauteur d'homme.

De plus, le risque de fournir des éléments de bouchages non conformes est réduit à son minimum.

## Revendications

1. Dispositif de fourniture (1) d'éléments (2) triés pour alimenter un poste de travail en aval, ledit dispositif comprenant une chute (3) descendante qui amène les éléments, un moyen de traitement (4) à l'unité qui reçoit les éléments de la chute, une branche transporteuse ascendante (5) qui s'étend à partir du moyen de traitement et qui en reçoit les éléments (2), et un moyen d'éjection (6) situé au niveau de la branche transporteuse ascendante, au moins un moyen de vision (7) positionné pour contrôler les éléments au niveau du moyen de traitement (4), tel qu'une caméra et une unité de commande qui déclenche le moyen de vision (7) en fonction d'un signal représentant l'avancement du moyen de traitement (4) et qui déclenche l'actionnement du moyen d'éjection (6) en cas de détection d'un défaut par le moyen de vision (7), le fonctionnement du moyen de vision (7) étant synchronisé avec celui du moyen de traitement.

2. Dispositif de fourniture selon la revendication 1, **caractérisé en ce que** le moyen de vision (7) est situé en façade au moyen de traitement (4) de façon à contrôler l'une des faces de l'élément (2).

3. Dispositif de fourniture selon l'une des revendications 1 ou 2, **caractérisé en ce que** le moyen de vision (7) est situé sur un côté du moyen de traitement (4) de façon à contrôler une partie de la tranche de l'élément.

4. Dispositif de fourniture selon l'une des revendications 1 à 3, **caractérisé en ce que** le moyen de traitement (4) comprend une roue de référencement (8) qui délivre les éléments à l'unité à une roue de retour (9) et ladite roue de référencement (8) et la roue de retour (9) sont équipées de surfaces (10) de référencement qui exercent une poussée sur l'élément pour le mettre au pas et pour le déplacer, ladite roue de retour (9) appartenant au moyen de traitement (4).

5. Dispositif de fourniture selon l'une des revendications 1 à 4, **caractérisé en ce que** le moyen de traitement (4) comprend une roue de référencement (8) qui délivre les éléments à une courroie montée sur la roue de retour (9), ladite courroie et ladite roue de référencement sont équipées de surfaces (10) de référencement qui exercent une poussée sur l'élément pour le mettre au pas et pour le déplacer, ladite roue de retour (9) appartenant au moyen de traitement (4).

6. Procédé de fourniture d'éléments (2) triés pour alimenter un poste de travail en aval, ledit procédé comprenant une succession d'étapes consistant essentiellement à amener les éléments (2) en colonne unifilaire à l'aide d'une chute descendante vers un moyen de traitement (4) à l'unité,
puis, convoyer et effectuer une mise au pas des éléments à l'aide dudit moyen de traitement (4) à l'unité,
puis, élever les éléments à l'unité dans une branche transporteuse ascendante (5),
le procédé comprenant en outre, une étape de contrôle des éléments par au moins un moyen de vision (7) au niveau du moyen de traitement (4) à l'unité et une étape d'éjection de l'élément en fonction du résultat de l'étape de contrôle, ladite étape d'éjection étant mise en oeuvre par un moyen d'éjection (6) situé au niveau de la branche transporteuse ascendante (5).

7. Procédé selon la revendication 6, **caractérisé en ce que** l'étape de contrôle de l'élément est réalisée par un moyen de vision (7) qui est synchronisé avec le déplacement de l'élément (2) de bouchage dans le moyen de traitement (4).

8. Procédé selon l'une des revendications 6 ou 7, **caractérisé en ce qu'**une étape de contrôle est réalisée avec le moyen de vision (7) se situant en façade du moyen de traitement (4) de façon à contrôler une face de l'élément (2) de bouchage.

9. Procédé selon l'une des revendications 6 à 8, **caractérisé en ce qu'**une étape de contrôle est réalisée avec le moyen de vision (7) se situant sur un côté du moyen de traitement (4) de façon à contrôler une partie de la tranche de l'élément (2).

## Patentansprüche

1. Vorrichtung (1) zur Bereitstellung von sortierten Elementen (2) zum Beschicken einer stromabwärtigen Arbeitsstation, wobei die Vorrichtung Folgendes umfasst: ein Fallrohr (3), das die Elemente zuführt, ein Mittel (4) zur stückweisen Verarbeitung, das die Elemente aus dem Fallrohr aufnimmt, einen aufsteigenden Transportzweig (5), der sich vom Verarbeitungsmittel aus erstreckt und von diesem die Elemente (2) empfängt, und ein Auswurfmittel (6), das sich am aufsteigenden Transportzweig befindet, mindestens ein Sichtmittel (7), das dazu positioniert ist, die Elemente am Verarbeitungsmittel (4) zu kontrollieren, beispielsweise eine Kamera, und eine Steuereinheit, die das Sichtmittel (7) in Abhängigkeit von einem Signal, das den Fortschritt des Verarbeitungsmittels (4) darstellt, auslöst und das die Betätigung des Auswurfmittels (6) auslöst, wenn durch das Sichtmittel (7) ein Fehler festgestellt wird, wobei der Betrieb des Sichtmittels (7) mit dem des Verarbeitungsmittels synchronisiert ist.

2. Bereitstellungsvorrichtung nach Anspruch 1, **dadurch gekennzeichnet, dass** sich das Sichtmittel (7) an der Front des Verarbeitungsmittels (4) befindet, um eine der Seiten des Elements (2) zu kontrollieren.

3. Bereitstellungsvorrichtung nach einem der Ansprüche 1 oder 2, **dadurch gekennzeichnet, dass** sich das Sichtmittel (7) an einer Seite des Verarbeitungsmittels (4) befindet, um einen Teil der Kante des Elements zu kontrollieren.

4. Bereitstellungsvorrichtung nach einem der Ansprüche 1 bis 3, **dadurch gekennzeichnet, dass** das Verarbeitungsmittel (4) ein Referenzierungsrad (8) umfasst, das die Elemente stückweise einem Rückführrad (9) zuführt, und dass das Referenzierungsrad (8) und das Rückführrad (9) mit Referenzierungsflächen (10) ausgestattet sind, die einen Schub auf das Element ausüben, um es auszurichten und zu bewegen, wobei das Rückführrad (9) zum Verarbeitungsmittel (4) gehört.

5. Bereitstellungsvorrichtung nach einem der Ansprüche 1 bis 4, **dadurch gekennzeichnet, dass** das Verarbeitungsmittel (4) ein Referenzierungsrad (8) umfasst, das die Elemente einem am Rückführrad (9) montierten Riemen zuführt, wobei der Riemen und das Referenzierungsrad mit Referenzierungsflächen (10) ausgestattet sind, die einen Schub auf das Element ausüben, um es auszurichten und zu bewegen, wobei das Rückführrad (9) zum Verarbeitungsmittel (4) gehört.

6. Verfahren zur Bereitstellung von sortierten Elementen (2) zum Beschicken einer stromabwärtigen Arbeitsstation, wobei das Verfahren eine Abfolge von Schritten umfasst, die im Wesentlichen aus Folgendem bestehen:
Zuführen der Elemente (2) in einer einreihigen Kolonne mit Hilfe eines Fallrohrs zu einem Mittel (4) zur stückweisen Verarbeitung,
anschließend Befördern und Ausrichten der Elemente mit Hilfe des Mittels (4) zur stückweisen Verarbeitung,
anschließend stückweises Entnehmen der Elemente in einen aufsteigenden Transportzweig (5),
wobei das Verfahren ferner einen Schritt des Kontrollierens der Elemente durch mindestens ein Sichtmittel (7) am Mittel (4) zur stückweisen Verarbeitung und einen Schritt des Auswerfens des Elements in Abhängigkeit vom Ergebnis des Kontrollschritts umfasst, wobei der Auswurfschritt durch ein am aufsteigenden Transportzweig (5) befindliches Auswurfmittel (6) erfolgt.

7. Verfahren nach Anspruch 6, **dadurch gekennzeichnet, dass** der Schritt des Kontrollierens des Elements durch ein Sichtmittel (7) erfolgt, das mit der Bewegung des Verschlusselements (2) im Verarbeitungsmittel (4) synchronisiert ist.

8. Verfahren nach einem der Ansprüche 6 oder 7, **dadurch gekennzeichnet, dass** ein Kontrollschritt mit dem an einer Front des Verarbeitungsmittels (4) befindlichen Sichtmittel (7) durchgeführt wird, um eine Seite des Verschlusselements (2) zu kontrollieren.

9. Verfahren nach einem der Ansprüche 6 bis 8, **dadurch gekennzeichnet, dass** ein Kontrollschritt mit dem an einer Seite des Verarbeitungsmittels (4) befindlichen Sichtmittel (7) durchgeführt wird, um einen Teil der Kante des Elements (2) zu kontrollieren.

## Claims

1. Device (1) for providing sorted elements (2) in order to supply a downstream workstation, said device comprising a descending chute (3) that conducts the elements, a means (4) for individual processing that receives the elements from the chute, an ascending transporter branch (5) that extends from the processing means and that receives the elements (2) therefrom, and an ejection means (6) situated at the level of the ascending transporter branch,
at least one viewing means (7) positioned so as to inspect the elements at the level of the processing means (4), such as a camera and a control unit that triggers the viewing means (7) as a function of a signal representing the forward movement of the processing means (4) and that triggers the actuation of the ejection means (6) in the event of detection of a defect by the viewing means (7), the operation of the viewing means (7) being synchronized with that of the processing means.

2. Provision device according to Claim 1, **characterized in that** the viewing means (7) is situated in front of the processing means (4) so as to inspect one of the faces of the element (2).

3. Provision device according to either of Claims 1 and 2, **characterized in that** the viewing means (7) is situated on one side of the processing means (4) so as to inspect a part of the edge face of the element.

4. Provision device according to one of Claims 1 to 3, **characterized in that** the processing means (4) comprises a referencing wheel (8) that delivers the elements individually to a return wheel (9) and said referencing wheel (8) and the return wheel (9) are equipped with referencing surfaces (10) that exert a push on the element so as to space it and so as to move it, said return wheel (9) belonging to the processing means (4).

5. Provision device according to one of Claims 1 to 4, **characterized in that** the processing means (4) comprises a referencing wheel (8) that delivers the elements to a belt mounted on the return wheel (9), said belt and said referencing wheel are equipped with referencing surfaces (10) that exert a push on the element so as to space it and so as to move it, said return wheel (9) belonging to the processing means (4).

6. Method for providing sorted elements (2) in order to supply a downstream workstation, said method comprising a succession of steps essentially consisting in conducting the elements (2) in a single-file column with the aid of a descending chute towards a means (4) for individual processing,
then, conveying and spacing the elements with the aid of said means (4) for individual processing,
then, lifting the elements individually in an ascending transporter branch (5),
the method also comprising a step of inspecting the elements via at least one viewing means (7) at the level of the means (4) for individual processing and a step of ejecting the element as a function of the result of the inspection step, said ejection step being implemented by an ejection means (6) situated at the level of the ascending transporter branch (5).

7. Method according to Claim 6, **characterized in that** the step of inspecting the element is performed by a viewing means (7) that is synchronized with the movement of the capping elements (2) in the processing means (4).

8. Method according to either of Claims 6 and 7, **characterized in that** an inspection step is performed with the viewing means (7) situated in front of the processing means (4) so as to inspect a face of the capping element (2).

9. Method according to one of Claims 6 to 8, **characterized in that** an inspection step is performed with the viewing means (7) situated on one side of the processing means (4) so as to inspect a part of the edge face of the element (2).
